(19) Europäisches Patentamt / European Patent Office / Office européen des brevets

(11) **EP 3 855 536 A1**

(12) **EUROPEAN PATENT APPLICATION**
published in accordance with Art. 153(4) EPC

(43) Date of publication:
**28.07.2021 Bulletin 2021/30**

(51) Int Cl.:
**H01M 4/14** (2006.01)     **H01M 4/62** (2006.01)
**H01M 4/68** (2006.01)     **H01M 4/73** (2006.01)

(21) Application number: **19872468.4**

(22) Date of filing: **16.10.2019**

(86) International application number:
**PCT/JP2019/040718**

(87) International publication number:
**WO 2020/080422 (23.04.2020 Gazette 2020/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.10.2018 JP 2018194797**

(71) Applicant: **GS Yuasa International Ltd.
Kisshoin, Minami-ku,
Kyoto-shi, Kyoto 601-8520 (JP)**

(72) Inventor: **SEKIYA, Kazuki
Kyoto-shi, Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(54) **LEAD STORAGE BATTERY AND METHOD FOR PRODUCING SAME**

(57)     A lead-acid battery, in which an electrode current collector of a positive electrode plate, which includes an electrode current collector and a positive electrode material held by the electrode current collector, has a frame rib, a lug provided on the frame rib, and inner ribs inside the frame rib. The frame rib includes an upper element continuous with the lug, a lower element facing the upper element, and a pair of side elements coupling the upper element with the lower element. The inner ribs include a longitudinal rib extending in a first direction from the upper element toward the lower element, and a transverse rib extending in a second direction from one of the side elements toward the other of the side elements. A striped pattern of a metallic fibrous structure is seen in a cross-section perpendicular to the first direction of the longitudinal rib. An outer peripheral region of the cross-section is made up of a first portion in which the fibrous structure elongates along a contour of the cross-section and a second portion except for the first portion. A percentage of a length of a contour corresponding to the second portion to a total length of the contour of the cross-section is 30% and more. The thickness of an over-paste of the positive electrode material over the current collector is 0.20 mm or more.

Fig. 1A

EP 3 855 536 A1

Fig. 1B

**Description**

TECHNICAL FIELD

The present invention relates to a lead-acid battery and a method for manufacturing the same.

BACKGROUND ART

Lead-acid batteries are used for various purposes such as in-vehicle use and industrial use. In particular, with regard to in-vehicle lead-acid batteries, there has been a demand for improving the life performance in a partial state of charge (PSOC) in accordance with the expanded use of idling-stop vehicles.

A lead-acid battery is provided with an electrode plate group in which a positive electrode plate and a negative electrode plate are alternately stacked with a separator therebetween. The electrode plate is made up of a current collector and an electrode material held by the current collector. As a current collector, a punched grid formed by press punching has fewer restrictions on grid design than an expanded grid and has the advantage that a grid design excellent in conductivity can be selected.

Patent Document 1 proposes that in a lead grid plate formed by press-punching a rolled plate of a lead alloy, the thicknesses of inner longitudinal and transverse bars are made smaller than the thickness of an outer frame, the thickness of the outer frame is in the range of 0.8 to 1.5 mm, and the thicknesses of the inner bars are in the range of 0.6 to 0.8 mm. It is also proposed that the inner frame of the lead grid plate formed by press-punching a rolled plate of a lead alloy having a thickness of 1.2 to 1.5 mm is deformed in the thickness direction to set the thicknesses of the inner longitudinal and transverse bars in the range of 0.6 to 0.8 mm.

Patent Document 2 proposes that in a positive electrode plate for a lead-acid battery formed by filling a grid body, in which Sb is contained and Sb is unevenly distributed on a surface portion, with an active material paste, the filling with the active material paste on the surface side of the grid body in which Sb is unevenly distributed is made higher than the surface of the grid body or is made at least 0.5 mm higher than the surface of the grid body.

Patent Document 3 proposes that in a flooded-type lead-acid battery, a ratio $(Vp + Vn)/Ve$ of a total volume $Vp + Vn$ of a total pore volume $Vp$ of the positive active material and a total pore volume $Vn$ of the negative active material to a volume $Ve$ of the electrode plate group is from 0.27 to 0.32, and a ratio $Vp/Ve$ of the total pore volume $Vp$ of the positive active material to the volume $Ve$ of the electrode plate group is from 0.13 to 0.15. It is also disclosed that an antimony content in the positive active material is from 0.04 to 0.25% by mass.

PRIOR ART DOCUMENTS

PATENT DOCUMENTS

Patent Document 1: JP-A-51-60936
Patent Document 2: JP-A-10-275618
Patent Document 3: JP-A-2015-38860

SUMMARY OF THE INVENTION

PROBLEMS TO BE SOLVED BY THE INVENTION

In the positive current collector, when the binding property between the positive electrode material and the current collector is low, the positive electrode material easily cracks during the curing of the positive electrode plate. As a result, at the time of assembling the battery, the positive electrode material easily peels off from the grid, and a plate defect easily occurs.

In particular, a lead-acid battery using a punched current collector for the positive electrode has a lower binding property between the positive electrode material and the grid than an expanded grid, and the plate defect easily occurs.

MEANS FOR SOLVING THE PROBLEMS

One aspect of the present invention relates to a lead-acid battery including: a positive electrode plate; a negative electrode plate; a separator interposed between the positive electrode plate and the negative electrode plate; and an electrolyte solution. The positive electrode plate includes a current collector and a positive electrode material held by the current collector. The current collector has a frame rib, a lug provided on the frame rib, and inner ribs inside the frame rib. The frame rib includes an upper element continuous with the lug, a lower element facing the upper element, and a pair of side elements coupling the upper element with the lower element. The inner rib includes a longitudinal rib extending in a first direction from the upper element toward the lower element, and a transverse rib extending in a second direction from one of the side elements toward the other of the side elements. A striped pattern of a metallic fibrous structure is seen in a cross-section perpendicular to the first direction of the longitudinal rib. An outer peripheral region of the cross-section is made up of a first portion in which the fibrous structure elongates along a contour of the cross-section and a second portion except for the first portion. A percentage R of a length of a contour corresponding to the second portion to a total length of the contour of the cross-section is 30% or more. The thickness of an over-paste of the positive electrode material over the current collector is 0.20 mm or more.

ADVANTAGES OF THE INVENTION

According to the present invention, a lead-acid battery with few manufacturing defects can be achieved.

BRIEF DESCRIPTION OF THE DRAWINGS

Fig. 1A is a plan view showing an appearance of a current collector for use in a lead-acid battery according to one embodiment of the present invention.
Fig. 1B is a plan view showing an appearance of a current collector for use in a lead-acid battery according to another embodiment.
Fig. 2A is a cross-sectional photograph of a longitudinal rib perpendicular to a first direction.
Fig. 2B is a conceptual view of a section C.
Fig. 3 is a cross-sectional photograph of an inner rib in which a cross-section of a fibrous structure is seen.
Fig. 4 is a cross-sectional conceptual view showing the progress of corrosion of the inner rib.
Fig. 5 is a perspective view showing an appearance of a lead-acid battery.
Fig. 6 is a schematic view showing a cross-section of a positive electrode plate over which a positive electrode material has been pasted.
Fig. 7 is a graph showing the relationship between the thickness of the over-paste and a plate defect rate.
Fig. 8 is a graph showing the relationship between a percentage (second-portion rate) R of the length of a contour corresponding to a second portion to the total length of a contour of an outer peripheral region in the cross-section of the longitudinal rib, and the plate defect rate.
Fig. 9 is a graph showing the relationship between the percentage (second-portion rate) R of the length of the contour corresponding to the second portion to the total length of the contour of the outer peripheral region in the cross-section of the longitudinal rib, and the corrosion rate and the elongation (amount of deformation) of a grid in the height direction.

MODE FOR CARRYING OUT THE INVENTION

A lead-acid battery according to one aspect of the present invention includes a positive electrode plate, a negative electrode plate, a separator interposed between the positive electrode plate and the negative electrode plate, and an electrolyte solution. The positive electrode plate includes a current collector and a positive electrode material held by the current collector. The current collector has a frame rib, a lug provided on the frame rib, and inner ribs inside the frame rib. The inner ribs may have a net shape. The frame rib 110 includes an upper element 111 continuous with a lug 130, a lower element 112 facing the upper element 111, and a pair of side elements 113 and 114 coupling the upper element 111 with the lower element 112. The inner ribs include a longitudinal rib extending in a first direction from the upper element toward the lower element, and a transverse rib extending in a second direction from one side element toward the other side element. The first direction is a direction parallel to the side element, and the second direction is a direction parallel to the upper element and the lower element. Note that the current collector is also referred to as a grid body. However, the rib frame of the current collector or the grid body is not limited to a grid shape or a net shape.
The longitudinal rib may extend parallel to the side elements or may extend obliquely with respect to the side elements. The longitudinal rib may be straight, curved, or slightly bent. That is, the longitudinal rib may only extend so that a vector in the first direction is larger than a vector in the second direction. The frame rib may have a rectangular shape.
The transverse rib may extend parallel to the upper or lower element and may extend obliquely with respect to the upper or lower element. The transverse rib may be straight, curved, or slightly bent. That is, the transverse rib may only extend so that a vector in the second direction is larger than a vector in the first direction.

The cross-section of the longitudinal rib perpendicular to the first direction, that is, the cross-section parallel to the upper element and parallel to the current collector in the thickness direction (hereinafter also referred to as section C), shows a striped pattern of a metallic fibrous structure. The outer peripheral region of the section C is made up of a first portion in which the fibrous structure (direction of stripes) extends along the contour (hereinafter also referred to as a contour C) of the section C, and a second portion except for the first portion. The contour of the section C means a line corresponding to the outer surface of the longitudinal rib. The outer peripheral region of the section C is a peripheral region along the contour of the section C, has a depth of at least 55 $\mu$m or more from a line corresponding to the outer surface, and preferably has a depth of 100 pm or more.

In the second portion, no striped pattern may be observed, or a striped pattern extending in the depth direction of the outer peripheral region may be observed. Here, a percentage R (hereinafter also referred to as a second-portion rate R) of the contour (hereinafter also referred to as a second contour part) corresponding to the second portion to the total length of the contour C is 30% or more. In other words, a percentage (hereinafter also referred to as a first-portion rate) of the contour (hereinafter also referred to as a first contour part) corresponding to the first portion to the total length of the contour C is less than 70%. Further, the thickness of the over-paste of the positive electrode material over the current collector is 0.20 mm or more.

By making the over-paste as thick as 0.20 mm or more and controlling the second-portion rate as described above, the positive electrode material hardly cracks during the curing of the positive electrode plate. As a result, a manufacturing defect caused by cracks in the positive electrode material during curing is prevented, and the life of the lead-acid battery is extended even in usage conditions that are assumed to be used in a partial state of charge (PSOC).

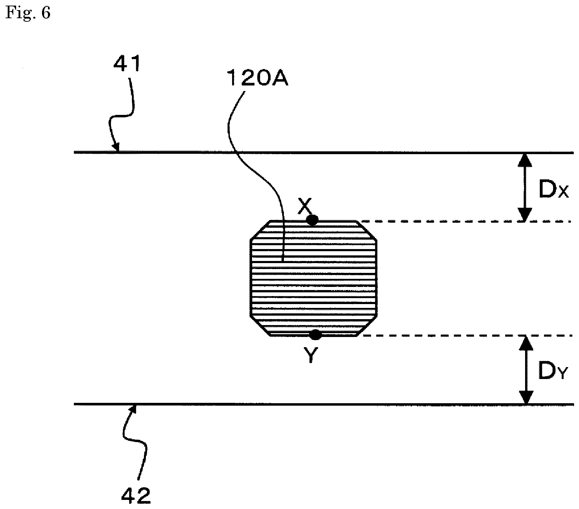

The thickness of the over-paste refers to the shortest distance from the surface of the current collector (longitudinal rib) to the outer surface of the positive electrode material. Fig. 6 is a cross-sectional view of the positive electrode plate in a state where the positive electrode material is held by the positive current collector.

As will be described later, the cross-sectional shape of the longitudinal rib is preferably octagonal and may take any shape. Thus, it is conceivable that the distance from the surface of the longitudinal rib to the outer surface of the positive electrode material is not constant. In this case, the thickness of the over-paste refers to the shortest distance from the surface of the longitudinal rib to the outer surface of the positive electrode material (i.e., the thickness at a place where the paste is thinnest). In the section C of a longitudinal rib 120A shown in Fig. 6, a distance Dx to an outer surface 41 of the positive electrode material at a place X on the contour of the longitudinal rib and a distance Dy to an outer surface 42 (the back surface of the outer surface 41) of the positive electrode material at a place Y on the contour of the longitudinal rib are the thicknesses of the over-paste on the section C. The thickness of the over-paste over the current collector is determined by averaging the distances $D_X$ and $D_Y$ in a plurality of cross-sections having different positions of the plurality of longitudinal ribs in the first direction.

Specifically, the positive electrode plate is divided into three sections in the vertical direction (first direction) and is divided into three sections of an upper region on the upper element side of the frame rib, a lower region on the lower element side of the frame rib, and a middle region between the upper region and the lower region. Further, the positive electrode plate divided into three sections is each divided into four sections in the horizontal direction (second direction), and the positive electrode plate is divided into a total of 12 plate pieces. One plate piece is arbitrarily selected from each of the four plate pieces corresponding to the upper region, the four plate pieces corresponding to the middle region, and the four plate pieces corresponding to the lower region so that positions of the plate pieces in the horizontal directions are different, and three plate pieces in total are selected. The sections C of three longitudinal ribs are arbitrarily selected from each of the three selected plate pieces, and a total of nine longitudinal rib sections C are selected. The selected nine cross-sections are observed with a microscope to obtain the shortest distances Dx and Dy. Then, the shortest distances are averaged at a total of 18 places on both sides of the positive electrode plate to determine the thickness of the over-paste over the current collector. At the time of observing the cross-section, the lead-acid battery in a fully charged state after chemical conversion or during use (preferably at the initial stage of use) is disassembled, the electrode plate taken out is washed with water, and the electrolyte solution containing sulfuric acid is removed and dried. Thereafter, the entire positive electrode plate is impregnated with a vinyl ester resin or an epoxy resin and cured. A predetermined place is cut in a cured state, and the cut cross-section is polished.

Note that the lead-acid battery in the fully charged state refers to a chemically converted lead-acid battery having been fully charged. So long as after chemical conversion, the lead-acid battery may be fully charged immediately after chemical conversion or after a lapse of time from chemical conversion. For example, a chemically converted lead-acid battery in use (preferably at the initial stage of use) may be fully charged. The battery in the initial stage of use refers to a battery that has not been used for a long time and has hardly been degraded.

In the present specification, in the case of a flooded-type battery, the fully charged state of the lead-acid battery is a state where in a water bath at 25°C $\pm$ 2°C, the constant current charge is performed at a current (A) 0.2 times a number indicated as a rated capacity (Ah) until 2.5 V/cell is reached, and thereafter, the constant current charge is performed at a current (A) 0.2 times the number indicated as the rated capacity (Ah) for two hours. In the case of a valve regulated battery, the fully charged state of the lead-acid battery is a state where a constant current constant voltage charge of 2.23 V/cell is performed in an air bath at 25°C ± 2°C at a current (A) 0.2 times a number indicated as the rated capacity (Ah), and the charge is completed when the charge current at the constant voltage charge becomes 0.005 times the number indicated as the rated capacity (Ah). Note that the numerical value indicated as the rated capacity is a numerical value in units of Ah. The unit of the current which is set based on the numerical value indicated as the rated capacity is A.

As the first-portion rate is increased, the cross-section perpendicular to the fiber length of the fibrous structure becomes less likely to be exposed on the outer surface of the outer peripheral region of the section C. On the other hand, as the second-portion rate R is increased, the striped pattern of the metallic fibrous structure is not seen, and the cross-section perpendicular to the fiber length of the fibrous structure is seen. The cross-section perpendicular to the fiber length of the fibrous structure has many grain boundaries.

From the above, as will be described later, there is a tendency that as the first-portion rate is increased, the elongation of the current collector is reduced more, and the electrode material is prevented more from falling off during overcharge. However, the first portion has a lower binding property with the electrode material than the second portion. Thus, as the first-portion rate is increased, the binding property between the electrode material and the current collector deteriorates.

In particular, when the binding property between the positive electrode material and the current collector is not sufficient, the positive electrode material easily cracks during the curing of the positive electrode plate. As a result, at the time of assembling the battery, the positive electrode material easily peels off from the current collector and fall off, and a plate defect easily occurs.

This point is considered to be a remarkable problem when a punched current collector is used for the positive electrode plate. For example, in a current collector using an expanded grid, the rib portion of the grid has a complicated three-dimensional structure, so that the binding property with the electrode material can be ensured to some extent in the portion of the three-dimensional structure. In contrast, in the punched current collector, the contact surface between the inner rib and the electrode material is basically flat, and it is thus difficult to ensure the binding property.

However, the inventor of the present application has found that by setting the thickness of the over-paste to 0.20 mm or more, more preferably 0.21 mm or more, the defect rate of the positive electrode plate after curing is significantly reduced as compared to a case where the thickness of the over-paste is less than 0.20 mm.

In one aspect of the present invention, in the lead-acid battery, the thickness of the over-paste of the positive electrode material is controlled to a certain value or more. Thereby, the binding property between the positive electrode materials is enhanced, and the binding property as the plate is enhanced. Further, by increasing the amount of the positive electrode material, the water evaporation of the electrode plate during curing is delayed. Thereby, the binding force between the current collector and the positive electrode material may be improved, and the cracking in the positive electrode material may be prevented. A synergistic effect of these is considered to have significantly reduced the defect rate,

In addition, in the punched current collector, by controlling the thickness of the over-paste of the positive electrode material to a certain value or more and controlling the second-portion rate R to a certain percentage or more (the first-portion rate to less than a certain percentage), a lead-acid battery is configured to be capable of reducing the defect rate of the positive electrode plate and suitable for use in PSOC.

The first portion and the second portion are different in the form of progress of corrosion. In general, the corrosion of the current collector proceeds preferentially in the cross-section perpendicular to the fiber length of the fibrous structure exposed to the outer surface. On the outer surface of the first portion of the outer peripheral region, the fibrous metallic structure extends in the surface direction of the inner rib. That is, the crystal grain boundary extends longer in the surface direction of the inner rib than in the depth direction of the inner rib. Therefore, a corrosion layer formed in the first portion of the outer peripheral region is formed along the surface direction of the inner rib and is hardly formed to a deep position inside the inner rib. The corrosion layer formed along the outer surface of the first portion of the outer peripheral region has a low bonding strength with the current collector (inner rib). Thus, when gas is generated at the interface between the current collector (the outer surface of the first portion of the outer peripheral region) and the corrosion layer, the corrosion layer is relatively easily peeled off from the current collector. On the other hand, on the outer surface of the second portion of the outer peripheral region, the fibrous metallic structure extends in the depth direction of the inner rib. In other words, the grain boundary extends longer in the depth direction of the inner rib than in the surface direction of the inner rib. Hence the corrosion layer formed along the outer surface of the second portion of the outer peripheral region has a high bonding strength with the current collector (inner rib). Even when gas is generated at the interface between the current collector (the second portion of the outer peripheral region) and the corrosion layer, the corrosion layer is hardly peeled off from the current collector, and stress is applied to the inner rib to deform the inner rib. That is, in the second portion of the outer peripheral region in which the fibrous metallic structure extends in the depth direction of the inner rib, the corrosion layer is less likely to be peeled off than in the first portion in which the fibrous metallic structure extends in the surface direction of the inner rib, and stress is more likely to be received from the corrosion layer, which causes the deformation of the current collector. Therefore, even when the amount of corrosion is the same, the smaller the second-portion rate R (the larger the first-portion rate), the more the elongation of the current collector is reduced, and the more the electrode material is prevented from falling off.

In the first portion in the section C, the corrosion of the longitudinal rib easily proceeds shallow, and the elongation of the current collector due to the shallow corrosion is small. In contrast, in the second portion in the section C, the corrosion of the longitudinal rib easily proceeds deep in a wedge shape, and the elongation of the current collector due to the deep corrosion is likely to increase. As a result, even when the amount of corrosion is the same, there is a tendency that the larger the first-portion rate, the more the elongation of the current collector is reduced, and the more the electrode material is prevented from falling off. Thereby, the elongation of the current collector is reduced even during overcharge, so that the positive electrode material can be prevented from falling off.

When the second-portion rate is 50% or less, the degree of progress of corrosion tends to be uniform throughout the inner ribs. Due to such uniform corrosion, the uneven distribution of corroded portions is prevented, and the unidirectional elongation of the current collector can be prevented.

On the other hand, in the cross-section perpendicular to the second direction of the transverse rib, that is, in the cross-section parallel to the side element and parallel to the thickness direction (hereinafter also referred to as a section G), the striped pattern of the metallic fibrous structure is hardly seen, and generally, a cross-section perpendicular to the fiber length of fibrous structure is seen. Almost the whole circumference of the outer peripheral region of the section G usually corresponds to the second portion of the section C. That is, almost the whole circumference of the outer peripheral region of the section G is made of a fibrous structure extending in the second direction. Therefore, in the outer peripheral region of the section G, the elongation of the current collector is reduced even when the corrosion amount is the same.

When the charge and discharge are repeated with a current at a five-hour rate, the expansion and contraction of the electrode material are repeated, and the interface between the current collector and the electrode material becomes likely to be separated physically. This is considered to be the cause of the decrease in the initial capacity ratio. It is conceivable that the first portion easily forms a layered shallow corrosion layer, and the second portion forms a wedge-shaped deep corrosion layer. Therefore, the binding force between the current collector and the electrode material is higher in the second portion than in the first portion.

As described above, from the viewpoint of reducing the elongation of the current collector due to corrosion and preventing the falling-off of the electrode material, it is preferably preferable to lower the second-portion rate R (increase the first-portion rate). The lower the second-portion rate R (the higher the first-portion rate), the more the elongation of the current collector due to the use accompanied by overcharge is reduced, and the more the electrode material is prevented from falling off. However, from the viewpoint of reducing the plate defects of the positive electrode plate, the second-portion rate is preferably high. Therefore, there is a trade-off relationship between reducing the elongation of the current collector and reducing the plate defects.

However, in applications that are expected to be used in PSOC, such as idling-stop vehicles, lead-acid batteries are often used in a poor charged state and are rarely charged to an overcharged state or a fully charged state. From this point of view, it is conceivable that the corrosion of the positive current collector and the elongation of the current collector are less likely to be problems and that the second-portion rate R need not be made excessively small.

Focusing on this point, in one aspect of the present invention, by limiting the second-portion rate R to 30% or more (the first-portion rate to less than 70%), a lead-acid battery is configured to be capable of reducing the defect rate of the positive electrode plate and suitable for use in PSOC. When the second-portion rate R is high, the positive current collector easily elongates due to corrosion, but by increasing the thickness of the over-paste to 0.20 mm or more, the electrolyte solution hardly penetrates the surface of the current collector, and the progress of corrosion is eased. It is thereby possible to prevent the positive electrode material from falling off due to elongation.

More preferably, in the punched current collector, by setting the second-portion rate to 30% or more and 60% or less (the first-portion rate to more than 40% and less than 70%), it is possible to achieve a lead-acid battery in which the elongation of the current collector after charge and discharge is limited within a certain range in actual use while the defect rate of the positive electrode plate in manufacturing is reduced, and the falling-off and short circuit of the positive electrode material due to the elongation of the current collector are prevented. More preferably, by setting the second-portion rate to 30% or more and 40% or less (the first-portion rate to more than 60% and less than 70%), it is possible to achieve a lead-acid battery in which the elongation of the current collector after charge and discharge is significantly reduced, and the falling-off and short circuit of the positive electrode material due to the elongation of the current collector are prevented.

As described above, the present invention is useful in the case of the punched current collector. As the punched current collector, for example, a punched grid body of a stretched sheet (also referred to as a rolled plate) of a lead or lead alloy is preferred. The stretched sheet may be a uniaxially stretched sheet or a biaxially stretched sheet.

Further, the positive electrode material may contain antimony (Sb). It was found that the defect rate of the positive electrode plate can be further reduced by containing Sb in the positive electrode material.

It was initially thought that containing Sb in the positive electrode material would cause an increase in the number of defects in the positive electrode plate because uncured electrode materials easily remain. However, the opposite was true, and the defect rate fell unexpectedly. The reason for this is currently being clarified, but it is conceivable that when Sb is contained, the oxidation reaction rate of lead during curing changes to prevent the generation of cracks in the positive electrode plate during curing. Note that the above is merely one view of the inventor at the present time, and the present invention is not limited thereto.

Further, by adding Sb, the softening of the positive active material is prevented, and a lead-acid battery with a long life can be achieved.

The positive electrode material preferably contains 0.01 to 0.2 parts by mass of Sb relative to 100 parts by mass of the positive electrode material. When the Sb content in the positive electrode material is 0.01% by mass or more, a remarkable defect reducing effect can be obtained. On the other hand, from the viewpoint of reducing the amount of liquid reduction, the Sb content in the positive electrode material is preferably 0.2% by mass or less. These Sb contents are the contents in the positive electrode material after chemical conversion and are the contents in terms of Sb elements.

Here, the mass of the positive electrode material refers to a mass at the time of washing with water and drying the positive electrode material taken out of a lead-acid battery in a fully charged state, and the Sb content indicates the ratio of the mass of Sb in the positive electrode material. Although it is conceivable that Sb exists in the form of a compound (e.g., an oxide or a sulfuric acid compound), in this case, the Sb content is assumed to be calculated in consideration of only the mass of Sb contained in the compound. The Sb content in the positive and negative electrode materials is determined in the following manner: a lead-acid battery in a fully charged state after chemical conversion or during use (preferably at the initial stage of use) is dissembled, the removed electrode plate is washed with water and dried, the electrode material is collected, a ground sample is dissolved in concentrated nitric acid, and inductively coupled plasma (ICP) emission analysis is performed.

More preferably, the positive electrode plate may include a mat attached to the exposed surface of the positive electrode material. The above mat slows the water evaporation rate during curing to prevent the generation of cracks in the positive electrode plate. After the curing of the positive electrode plate, the mat protects the positive electrode plate from vibration and the like caused by the transportation of the positive electrode plate until the end of the assembly of the battery (until the chemical conversion is completed), and prevents the growth of cracks generated during curing and the falling-off of the positive electrode material. Also, during the use of the battery, the mat prevents the softening of the positive active material or the falling-off of the positive electrode material due to the corrosion of the positive current collector.

The first-portion rate and the second-portion rate can be controlled intentionally. Even when the longitudinal rib originally has a large second-portion rate, it is possible to deform the longitudinal rib so as to crush the second portion. For example, in a case where the longitudinal rib is deformed by pressing, the second-portion rate R (first-portion rate) can be arbitrarily controlled by the speed of a press, the pressure of the press, the shape of the die, or the like. That is, deforming the longitudinal rib by pressing is not a sufficient condition for decreasing the second-portion rate R (increasing the first-portion rate), and it is necessary to appropriately control the pressing condition.

In the first portion, that the fibrous structure (direction of stripes) is along the contour of the section C refers to the following state. First, the inside of the frame rib of the grid body is divided into three equal sections: an upper region on the upper element side of the frame rib; a lower region on the lower element side of the frame rib; and a middle region between the upper region and the lower region. At that time, in a plurality of longitudinal ribs, four rows of the cross-sections C perpendicular to the first direction (parallel to the upper element and the lower element and parallel to the thickness direction) are formed. That is, one row of the sections C is formed in each of the upper region and the lower region, and two rows of the sections C are formed in the middle region. When the trisection dividing line corresponds to the intersection (node) of the longitudinal and transverse ribs, the current collector may be divided into three sections with the dividing line slightly shifted in whole or in part so that the section C is formed in the longitudinal rib portion between the intersections as much as possible. When the inside of the frame rib of the current collector is divided into three sections, the dimension of the lug or foot is not considered.

Next, from any two rows out of the four rows, a plurality of sections C to be observed (at least 60% or more of the sections C included in the two rows) are selected A portion of the outer peripheral region of the selected section C in which the stripes of the fibrous structure have an angle of less than 45° with the contour of the section C is the first portion. Specifically, at an arbitrary point P on the contour C of each section C, a tangent S1 of the point P is drawn, and a perpendicular L of the tangent S1 is drawn so as to pass through the point P. Next, a tangent S2 of a stripe existing at a depth of 55 pm from the point P on the perpendicular L and intersecting the perpendicular L is drawn at the intersection. When an angle θ between the tangent S2 and the tangent S1 is less than 45°, the point P constitutes a first contour part corresponding to the first portion. Such observation is appropriately performed on the contour C, the length of the first contour part is specified, and the percentage of the first contour part to the total length of the contour C is determined as a first-portion rate. When the angle θ is 45° or more, the point P constitutes the second portion. Even when it cannot be determined whether or not the point P constitutes the first contour part because the fibrous structure cannot be observed, the point P constitutes the second portion. The first-portion rate is determined for all selected sections C, and the average is calculated. The second-portion rate (%) is a value obtained by subtracting the above average value of the first-portion rates (%) from 100.

When the cut portion is the intersection of the longitudinal rib and the transverse rib (node), the average may be obtained excluding the cross-section, and the cut position of the longitudinal rib may be shifted so as to be off the node.

In the formation of the section C, a current collector before being filled with the electrode material may be used. Alternatively, a battery in a fully charged state is disassembled, an electrode plate is taken out and washed with water to remove an electrolyte solution, and the electrode plate is dried. Subsequently, the electrode material is removed from the electrode plate, and the electrode material adhering to the surface of the current collector is removed by mannitol. A vinyl ester resin or an epoxy resin may be immersed into the whole of the prepared current collector, the resin may be cured, and thereafter, the current collector may be cut together with the cured resin. The state of the metallic structure in the section C may only be observed by performing etching on the cross-section of the current collector and photographing with a microscope.

The thickness of the first portion may only be 55 pm or more. When the thickness of the region in which the striped pattern of the fibrous structure is observed is less than 55 pm, even in the outer peripheral region that appears at a glance as the first portion, the region is regarded not as the first portion but as the second portion. The first portion having a thickness of 55 pm or more has a sufficient action to prevent penetration of corrosion to the inside. In this case, the penetration of corrosion to the inside is likely to become highly uniform throughout the inner ribs. Therefore, the elongation of the current collector is remarkably reduced, and the falling of the electrode material is also remarkably prevented. From the viewpoint of further improving the prevention of the corrosion of the longitudinal rib from penetrating to the inside, the thickness of the first portion is preferably 100 pm or more.

The thickness of the first portion in the section C may only be measured as follows. First, a tangent S1 is drawn at an arbitrary point P1 on the first contour part, and a perpendicular L of the tangent S1 is drawn so as to pass through the point P1. Next, at a point Px moving from the point P1 to a depth of Q pm on the perpendicular L, a tangent S2 of a stripe intersecting the perpendicular L is drawn continuously. At this time, when the angle between the tangent S1 and the tangent S2 is continuously 45° or less, it can be said that the thickness of the first portion immediately below the point P1 is Q pm or more.

The thickness of the inner rib may only be, for example, from 0.7 mm to 3 mm. The rib width of the inner rib may only be, for example, from 0.7 mm to 3 mm.

The shape of the section C is not particularly limited but is preferably octagonal. When the section C is an octagon, the inner angle of the apex does not become excessively small, and the effect of preventing corrosion near the apex is enhanced. In order to form a longitudinal rib having an octagonal section C, for example, a longitudinal rib having a rectangular section C may only be deformed. The method for deforming the longitudinal rib is not particularly limited, but for example, the inner rib may only be pressed. At that time, the pressing conditions of the inner ribs may only be appropriately selected so that the second-portion rate R is 30% or more (the first-portion rate is less than 70%). Note that the octagonal shape does not have to be a strictly octagonal shape in the mathematical sense, and the apex may be slightly rounded, or each side may be bent slightly.

A method for manufacturing the lead-acid battery according to the embodiment of the present invention includes the steps of: preparing the current collector; and obtaining the positive electrode plate that includes the current collector and the positive electrode material. The step of preparing the current collector includes (i) preparing a rolled plate, and (ii) performing processing that includes punching on the rolled plate to obtain the current collector having the second-portion rate R of 30% or more. Here, in the step of obtaining the positive electrode plate, the thickness of the over-paste of the positive electrode material over the current collector is 0.20 mm or more.

Preferably, the step of preparing the current collector includes the steps of forming an intermediate grid body having a plurality of intermediate ribs formed in a grid shape by punching, and pressing the intermediate grid body from a thickness direction of the intermediate grid body to form at least some of the inner ribs. Here, the pressing can include deforming at least some of the plurality of intermediate ribs so that at least one end in a rib width direction intersecting an extending direction of each of the intermediate ribs is thinner than a center in the rib width direction and that the second-portion rate R is 30% or more.

By punching, an intermediate grid body (punched current collector) in which a rolled plate is processed into a predetermined shape (preferably into a grid shape) is obtained. Intermediate ribs form the grid of the intermediate grid body. The second-portion rate R can be adjusted by deforming the cross-sectional shape of the intermediate rib by pressing.

In order to obtain a high second-portion rate R, for example, an intermediate grid body having a narrowed intermediate rib width may be formed during the punching of the rolled plate. The second-portion rate R can also be adjusted by adjusting the ratio U of the length of the rib width of the intermediate rib to the thickness of the intermediate rib (thickness of the rolled plate). Further, the second-portion rate R can be controlled to an arbitrary value by combining one or both of the pressing and the adjustment of the ratio U.

The current collector (intermediate grid body) as thus obtained is filled with a positive electrode paste and then cured to obtain a positive electrode plate. The positive electrode paste may contain Sb. At this time, the filling amount of the positive electrode paste is adjusted so that the shortest distance from the surface of the current collector to the outer surface of the positive electrode material (positive electrode paste after curing and chemical conversion) is 0.20 mm or more (more preferably, 0.21 mm or more).

The step of obtaining the positive electrode plate can include a step of filling the current collector (intermediate grid body) with the positive electrode paste and a step of curing. The positive electrode plate can be cured at room temperature or at a higher temperature and high humidity. After the filling with the positive electrode paste and before the curing step, a mat for covering the positive electrode paste may be attached to the positive electrode plate, and the curing may be performed in a state where the mat is attached to the positive electrode plate. Thereafter, the cured positive electrode plates and the negative electrode plates are alternately stacked through separators to obtain an electrode plate group. Subsequently, the element is inserted into the container, and the container is filled with the electrolyte solution so that the electrode plate group is immersed in the electrolyte solution. Thereby, a lead-acid battery is manufactured.

Hereinafter, embodiments of the present invention will be described with reference to the drawings.

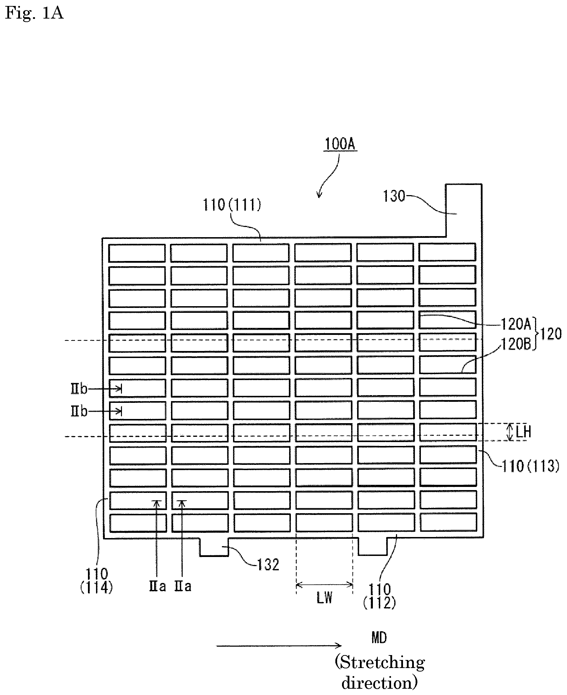

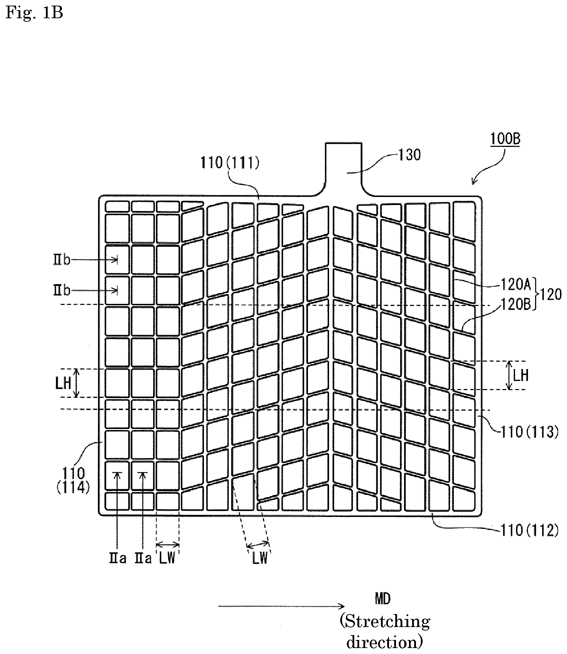

Figs. 1A and 1B are plan views showing appearances of current collectors 100A and 100B constituting a positive electrode plate in a lead-acid battery according to one embodiment and another embodiment of the present invention, respectively. Each of the current collectors 100A and 100B has a frame rib 110 and net-like inner ribs 120 inside the frame rib 110. The frame rib 110 includes an upper element 111 continuous with the lug 130, a lower element 112 facing the upper element 111 and continuous with a lower protrusion 132, and a pair of side elements 113 and 114 coupling the upper element 111 with the lower element 112. Dashed lines indicate the boundaries that divide the inner ribs into three equal sections: upper, middle, and lower regions. The current collector 100A of Fig. 1A has a lower protrusion (also referred to as a foot) 132 continuous with the lower element 112. In the current collector 100B of Fig. 1B, the transverse rib extends obliquely with respect to the upper or lower element. LH indicates the inner dimension length per grid of the longitudinal rib, and LW indicates the inner dimension length per grid of the transverse rib.

The current collectors 100A and 100B are, for example, grid bodies punched out of stretched sheets of lead or a lead alloy, and the stretching direction is a direction indicated by an arrow MD in Figs. 1A and 1B. A section C of a longitudinal rib 120A is a cross-section at line IIa-IIa in Fig. 1, and a section G of a transverse rib 120B is a cross-section at line IIb-IIb. The metallic structure of the stretched sheet easily forms a layered or fibrous structure extending in the stretching direction. Hence a striped pattern is generated in the section C. On the other hand, in the section G, a pattern due to the cutting of a layered or fibrous structure can occur.

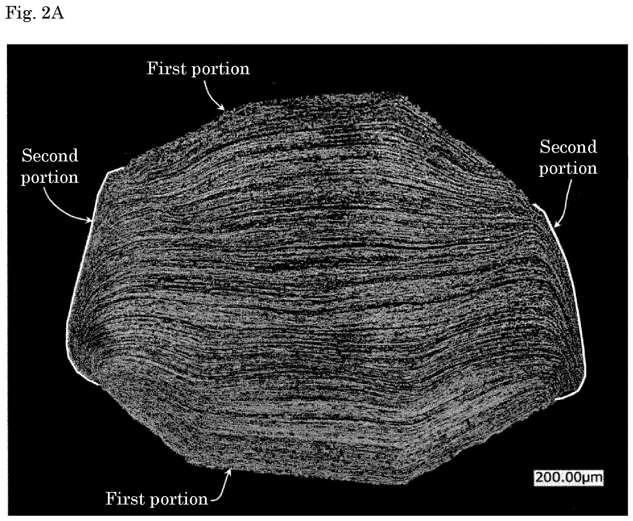

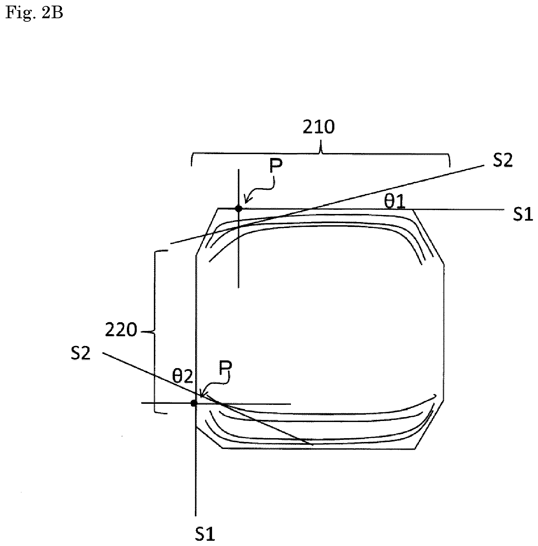

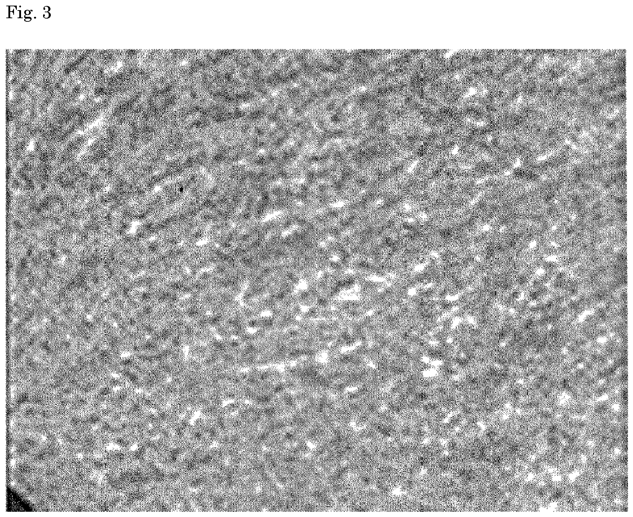

Fig. 2A is an example of a photograph of the section C of the longitudinal rib 120A, and the cross-section has an octagonal shape and shows the striped pattern of the metallic fibrous structure. Fig. 2B is a conceptual view of an example of an octagonal section C imitating Fig. 2A. On the other hand, Fig. 3 is an example of a photograph of the section G of the transverse rib 120B, and the cross-section has a pattern formed by a cross-section perpendicular to the fiber length of the metallic fibrous structure. In Fig. 2B, most of the left and right sides of the octagonal section C are a second portion 220, and the other outer peripheral region is a first portion 210. In the first portion 210, the stripe (tangent S2) of the fibrous structure has an angle $\theta 1$ of less than 45° with the contour (line S1) of the section C. On the other hand, in the second portion 220, no stripe of the fibrous structure can be confirmed, or the stripe (tangent S2) has an angle $\theta 2$ exceeding 45° with the contour (line S1) of the section C. In Fig. 2A, there is a region in the outermost layer of the second portion 220 where a striped pattern of a fibrous structure having a thickness of less than about 55 pm is observed, but such a thin portion does not constitute the first portion 210.

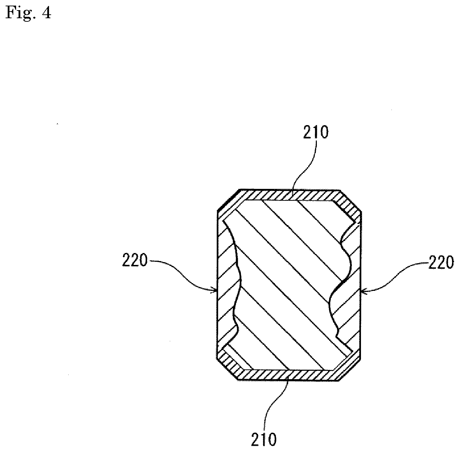

Fig. 4 is a conceptual view of the section C showing the progress of corrosion of the inner rib. A portion where the shallow corrosion layer has been formed is the first portion where the fibrous structure extends along the contour of the outer peripheral region, and even when corrosion proceeds, the corrosion layer is hardly formed deep. On the other hand, peeling tends to occur near the interface between the current collector and the electrode material. It is thus considered that the stress of the current collector trying to deform is easily relaxed.

On the other hand, a portion where a wedge-shaped deep corrosion layer has been formed is the second portion. When a deep corrosion layer is formed, non-uniform deformation of the current collector easily occurs, the current collector elongates, and the electrode material easily falls off. Thickening the over-paste can prevent the electrolyte solution from penetrating the surface of the current collector, reduce corrosion, and reduce the elongation of the current collector.

(Positive electrode plate)

The positive electrode plate of the lead-acid battery includes the current collector described above and a positive electrode material held by the current collector. The current collector constituting the positive electrode is preferably a positive electrode grid. The positive electrode material is obtained by removing the positive current collector from the positive electrode plate. However, when the mat described above is attached to the electrode plate, the mat is not included in the electrode material, and the thickness of the over-paste described above does not include the thickness of the mat. On the other hand, another mat-like sticking member may be stuck to the separator. In this case, the sticking member is included in the separator. The thickness of the sticking member is included in the thickness of the separator.

As the lead or lead alloy used for the positive current collector, a Pb-Ca alloy or a Pb-Ca-Sn alloy is preferred in terms of corrosion resistance and mechanical strength, and lead having a purity of three nines or higher may be used. The positive current collector may have lead alloy layers having different compositions, and a plurality of alloy layers may be used.

The positive electrode material contains a positive active material (lead dioxide or lead sulfate) that develops a capacity through an oxidation-reduction reaction. The positive electrode material may optionally contain an additive.

As an additive, the positive electrode material may contain antimony (Sb). The content of antimony (Sb) is preferably such that the Sb content in the positive electrode material after chemical conversion is 0.01 to 0.2% by mass in terms of Sb elements. Examples of the additive containing antimony include metal antimony (Sb), antimony oxides such as antimony trioxide ($Sb_2O_3$), antimony tetroxide, and antimony pentoxide, and antimony sulfate ($Sb_2(SO_4)_3$). An alloy of Pb and Sb may be mixed with the metal Pb of the lead powder material.

The density of the positive electrode material may only be, for example, 3.6 g/cm$^3$ or more. From the viewpoint of ensuring a sufficient initial capacity, the positive electrode material density is preferably 4.8 g/cm$^3$ or less.

The density of the positive electrode material means the bulk density of the positive electrode material in a fully charged state after chemical conversion and is measured in such a manner as follows. The battery in a fully charged state after chemical conversion or during use (preferably at the initial stage of use) is dissembled, and the obtained positive electrode plate is washed with water and dried to remove the electrolyte solution in the positive electrode plate. (The washing with water is performed until it is confirmed that the color of the pH test paper does not change by pressing the pH test paper against the surface of the electrode plate washed with water. However, the washing with water is performed within two hours. The positive electrode plate washed with water is dried at 60°C $\pm$ 5°C for about 6 hours. When a sticking member is included in the electrode plate after drying, the sticking member is removed from the electrode plate by peeling.) Subsequently, the positive electrode material is separated from the positive electrode plate to obtain an uncrushed measurement sample. A sample is charged into a measurement case and evacuated, which is then filled with mercury at a pressure of 0.5 psia to 0.55 psia ($\approx$ 3.45 kPa or more and 3.79 kPa or less) to measure the bulk volume of the positive electrode material, and the mass of the measurement sample is divided by the bulk volume to determine the bulk density of the positive electrode material. A volume obtained by subtracting the injection volume of mercury from the volume of the measurement case is defined as the bulk volume.

The density of the positive electrode material can be measured using an automatic porosimeter (Auto Pore IV 9505) manufactured by Shimadzu Corporation.

A non-chemically converted positive electrode plate is obtained in such a manner that a positive current collector is filled with a positive electrode paste, which is then cured and dried. Thereafter, the non-chemically converted positive electrode plate is converted chemically. The positive electrode paste is prepared by kneading a lead powder, an additive, water, sulfuric acid, and the like.

As described above, the filling amount of the positive electrode paste is adjusted so that the positive electrode paste is applied to have a certain thickness or more with respect to the surface of the positive current collector.

(Negative electrode plate)

The negative electrode plate of the lead-acid battery is made up of a current collector and a negative electrode material. The current collector constituting the negative electrode is preferably a negative electrode grid. The negative electrode material is obtained by removing the negative current collector from the negative electrode plate. A negative electrode grids for a large lead-acid battery may be formed by casting lead (Pb) or a lead alloy. As the negative electrode grid, a punched grid or an expanded grid may be used.

As the lead or lead alloy used for the negative current collector, a Pb-Ca based alloy, a Pb-Ca-Sn based alloy, pure lead, and the like are used preferably. The lead or lead alloy may further contain Ba, Ag, Al, Bi, As, Se, Cu, or the like as an additive element. The negative current collector may have a plurality of lead alloy layers having different compositions.

The negative electrode material contains, as an essential component, a negative active material (lead or lead sulfate), which exhibits a capacity by an oxidation-reduction reaction, and can contain an organic expander, a carbonaceous material, and an additive such as barium sulfate. The negative active material in a charged state is spongy lead, but a non-chemically converted negative electrode plate is usually prepared using a lead powder.

At least one kind selected from the group consisting of lignins and/or synthetic organic expanders may be used as the organic expander. Examples of the lignins include lignin and lignin derivatives. Examples of the lignin derivative include lignin sulfonic acid or its salt (alkali metal salt such as sodium salt). The organic expander is an organic polymer containing a sulfur element and generally contains a plurality of aromatic rings in the molecule and the sulfur element as a sulfur-containing group. Among the sulfur-containing groups, a sulfonic acid group or a sulfonyl group, which is a stable form, is preferred. The sulfonic acid group may be present in an acid form or in a salt form like a Na salt.

As a specific example of the organic expander, a condensate obtained using an aldehyde compound (aldehyde or its condensate such as formaldehyde), which is a compound having a sulfur-containing group and an aromatic ring, is preferable. Examples of the aromatic ring include a benzene ring and a naphthalene ring. When the compound having an aromatic ring has a plurality of aromatic rings, the plurality of aromatic rings may be coupled by direct bonding or a coupling group (e.g., alkylene group, sulfone group, etc.). Examples of such a structure include biphenyl, bisphenylalkane, and bisphenylsulfone. Examples of the compound having an aromatic ring include a compound having the aromatic ring described above and a hydroxy group and/or an amino group. The hydroxy group and the amino group may be directly bonded to the aromatic ring or may be bonded as an alkyl chain having the hydroxy group or the amino group. The compound having an aromatic ring is preferably a bisphenol compound, a hydroxybiphenyl compound, a hydroxynaphthalene compound, a phenol compound, or the like. The compound having an aromatic ring may further have a substituent. The organic expander may contain one kind of residues of these compounds or may contain a plurality of kinds thereof. The bisphenol compound is preferably bisphenol A, bisphenol S, bisphenol F, or the like.

The sulfur-containing group may be directly bonded to the aromatic ring contained in the compound and may, for example, be bonded to the aromatic ring as an alkyl chain having the sulfur-containing group.

Further, for example, a condensate obtained using an aldehyde compound of the compound having the aromatic ring described above and a monocyclic aromatic compound (aminobenzenesulfonic acid, alkylaminobenzenesulfonic acid, phenolsulfonic acid, or its substituent) may be used as the organic expander.

The content of the organic expander contained in the negative electrode material is, for example, preferably 0.01% by mass or more, more preferably 0.02% by mass or more, and still more preferably 0.05% by mass or more. On the other hand, the content is preferably 1.0% by mass or less, more preferably 0.8% by mass or less, and still more preferably 0.5% by mass or less. These lower and upper limits can be combined arbitrarily. Here, the content of the organic shrinkage inhibitor contained in the negative electrode material is a content in the negative electrode material collected from a chemically converted lead-acid battery in the fully charged state by a method to be described later.

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbon material including a graphite-type crystal structure and may be either artificial graphite or natural graphite.

The content of the carbonaceous material in the negative electrode material is, for example, preferably 0.05% by mass or more, and more preferably 0.2% by mass or more. On the other hand, the content is preferably 4.0% by mass or less, more preferably 3% by mass or less, and still more preferably 2% by mass or less. These lower and upper limits can be combined arbitrarily.

The content of barium sulfate in the negative electrode material is, for example, preferably 0.5% by mass or more, more preferably 1% by mass or more, and still more preferably 1.3% by mass or more. On the other hand, the content is preferably 3.0% by mass or less, more preferably 2.5% by mass or less, and still more preferably 2% by mass or less. These lower and upper limits can be combined arbitrarily.

Hereinafter, a method for quantifying the amounts of the organic expander, the carbonaceous material, and the barium sulfate contained in the negative electrode material will be described. Prior to quantitative analysis, a chemically converted lead-acid battery is fully charged and disassembled to obtain a negative electrode plate to be analyzed. The obtained negative electrode plate is washed with water and dried to remove the electrolyte solution in the negative electrode plate. (The washing with water is performed until it is confirmed that the color of the pH test paper does not change by pressing the pH test paper against the surface of the negative electrode plate washed with water. However, the washing with water is performed within two hours. The negative electrode plate washed with water is dried at 60°C ± 5°C in a reduced pressure environment for about six hours. When the sticking member is included in the negative electrode plate after drying, the sticking member is removed from the negative electrode plate by peeling). Next, the negative electrode material is separated from the negative electrode plate to obtain an uncrushed sample S.

(Organic expander)

The uncrushed sample S is crushed, and the crushed sample S is immersed in a 1 mol/L NaOH aqueous solution to extract the organic expander. An insoluble component is removed from a NaOH aqueous solution containing the extracted organic expander by filtration. The obtained filtrate (hereinafter also referred to as a filtrate to be analyzed) is desalted, concentrated, and dried to obtain a powder of the organic expander (hereinafter also referred to as a powder to be analyzed). Desalting may be performed by immersing the filtrate in distilled water in a dialysis tube.

The organic expander is specified by obtaining information from an infrared spectral spectrum of the powder to be analyzed, an ultraviolet-visible absorption spectrum of a solution obtained by dissolving the powder to be analyzed in distilled water or the like, a nuclear magnetic resonance (NMR) spectrum of a solution obtained by dissolving the powder to be analyzed in a solvent such as heavy water, a pyrolysis gas chromatography-mass spectrometry (GC-MS) capable of obtaining information on individual compounds constituting the substance, or the like.

The ultraviolet-visible absorption spectrum of the filtrate to be analyzed is measured. The content of the organic expander in the negative electrode material is quantified using a spectral intensity and a calibration curve prepared in advance. When the structural formula of the organic expander to be analyzed cannot be exactly specified, and the calibration curve of the same organic expander cannot be used, the calibration curve is prepared using an available organic expander exhibiting an ultraviolet-visible absorption spectrum, an infrared spectral spectrum, an NMR spectrum, and the like similar to those of the organic expander to be analyzed.

[Carbonaceous material and barium sulfate]

The uncrushed sample S is crushed, 50 ml of nitric acid having a concentration of 20% by mass is added to 10 g of the crushed sample S, and the mixture is heated for about 20 minutes to dissolve a lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C $\pm$ 5°C. The filtered sample is a mixed sample of a carbonaceous material and barium sulfate. A mass (A) of the mixed sample is measured by subtracting the mass of the membrane filter from the total mass of the dried mixed sample and the membrane filter. Thereafter, the dried mixed sample is placed in a crucible together with the membrane filter, and the crucible is heated to a temperature of 700°C or higher. The remaining residue is barium oxide. A mass (B) of barium sulfate is determined by converting the mass of barium oxide to the mass of barium sulfate. The mass of the carbonaceous material is calculated by subtracting the mass B from the mass A.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to a lead powder and various additives and kneading them. In the curing process, it is preferable to cure the non-chemically converted negative electrode plate at room temperature or at a higher temperature and humidity.

The chemical conversion can be performed by charging the electrode plate group in a state where the element including the non-chemically converted negative electrode plate is immersed in the electrolyte solution containing sulfuric acid in the container of the lead-acid battery. However, the chemical conversion may be performed before the lead-acid battery or the electrode plate group is assembled. The chemical conversion produces spongy lead.

(Electrolyte solution)

The electrolyte solution is an aqueous solution containing sulfuric acid and may be gelled as necessary. The specific gravity of the electrolyte solution in the chemically converted lead-acid battery in a fully charged state is, for example, 1.20 to 1.35 at 20°C and preferably 1.25 to 1.32.

(Separator)

A separator is usually disposed between the negative electrode plate and the positive electrode plate. A nonwoven fabric, a microporous film, or the like is used as the separator. The nonwoven fabric is a mat in which fibers are intertwined without being woven and is mainly made of fibers. For example, 60% by mass or more of the separator is formed of fibers. As the fiber, glass fiber, polymer fiber, pulp fiber, or the like can be used. The nonwoven fabric may contain components in addition to the fibers, such as an acid-resistant inorganic powder and a polymer as a binder. The microporous film is a porous sheet mainly made of components except for fiber components and is obtained by, for example, extrusion molding a composition containing, for example, a pore-forming additive (polymer powder, oil, etc.) into a sheet shape and then removing the pore-forming additive to form pores. The microporous film is preferably made mainly of a polymer component. As the polymer material, a polyolefin such as polyethylene or polypropylene is preferred.

The separator may be formed in a bag shape. In this case, the bag-shaped separator may house the positive electrode plate or may house the negative electrode plate. When the bag-shaped separator houses the positive electrode plate, it is possible to prevent a lower short circuit caused by the positive electrode material, having fallen off from the current collector and been accumulated on the bottom of the container, coming into contact with the negative electrode plate. On the other hand, when the bag-shaped separator houses the negative electrode plate, it is possible to prevent a short circuit due to the elongation of the positive current collector and the penetration of the separator. As in the present embodiment, in the use condition where the use is mainly made in the poor charged state, the elongation of the positive current collector is not a problem, and hence the positive electrode packaging is also permitted.

(Mat)

The mat may be provided on the positive electrode plate. The mat is attached to the exposed surface of the positive electrode material and has the effect of slowing the water evaporation rate during the curing of the positive electrode plate and preventing the generation of cracks in the positive electrode material. Further, after the electrode plate is cured, until the battery assembly is terminated (until the chemical conversion is completed), the positive electrode plate can be protected from vibrations and the like accompanying the transportation of the positive electrode plate, and the positive electrode material can be prevented from falling off. Further, the mat can exert the effect of preventing the positive electrode material from falling off due to the softening of the positive active material and the corrosion of the positive current collector also during actual use after assembling the battery.

The mat is made of a porous material similarly to the separator. As the mat, a woven fabric or a nonwoven fabric can be used. The nonwoven fabric is a mat that is entwined without weaving fibers. The woven fabric or the nonwoven fabric is mainly made of fibers. For example, 60% by mass or more of the porous layer is formed of fibers. As the fibers constituting the woven fabric or the nonwoven fabric, it is possible to use glass fibers, polymer fibers (polyolefin fibers, acrylic fibers, polyester fibers such as polyethylene terephthalate fibers, etc.), pulp fibers, and the like. Of these, glass fibers (e.g., a nonwoven fabric containing glass fibers) are preferred.

The nonwoven fabric containing glass fibers has the electric resistance and density equivalent to those of the nonwoven fabric containing polyethylene fibers, is relatively inexpensive, and is easy to manufacture. The woven fabric or the nonwoven fabric may contain components in addition to the fibers, such as an acid-resistant inorganic powder and a polymer as a binder.

The mat may be configured using one woven fabric or nonwoven fabric or may be configured by laminating a plurality of woven fabrics or nonwoven fabrics. The thickness of the mat is, for example, 5 $\mu$m to 600 $\mu$m. The thickness of the porous layer is the thickness when pressurized at 19.6 kPa in a dry state where no electrolyte solution is contained.

The thickness of the mat is preferably 10 pm to 500 pm. By setting the thickness of the mat to 10 pm or more, it is possible to sufficiently obtain the effect of preventing cracks generated in the positive electrode material. By setting the thickness of the porous layer to 500 pm or less, an increase in internal resistance due to the placement of the mat and the resultant deterioration in battery performance (PSOC life performance, charge acceptance property, etc.) are prevented. In addition, the thickness of the positive electrode plate does not become excessively large and does not interfere with the insertion of the element into the container.

The thickness of the mat is determined by the following procedure.

The lead-acid battery is disassembled, the positive electrode plate is taken out, and the mat is peeled off from the positive electrode plate. The mat is then washed with water to remove sulfuric acid and dried. A layered product is formed by laminating ten mats, the thickness of the layered product when pressurized to 19.6 KPa is measured, and a value obtained by dividing the thickness of the layered product by 10 is determined as the thickness per sheet of the porous layer.

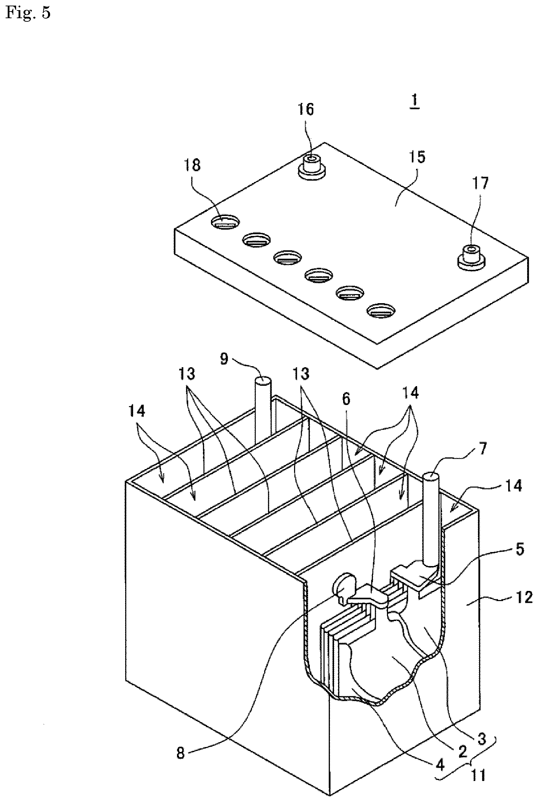

Fig. 5 shows the appearance of an example of the lead-acid battery according to the embodiment of the present invention.

A lead-acid battery 1 includes a container 12 storing an electrode plate group 11 and an electrolyte solution (not shown). The inside of the container 12 is partitioned into a plurality of cell chambers 14 by partitions 13. In each cell chamber 14, one electrode plate group 11 is housed. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed to supply a water addition liquid. The vent plug 18 may have a function of discharging gas generated in the cell chamber 14 to the outside of the battery.

The electrode plate group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, a negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode plate groups 11 of the adjacent cell chambers 14 in series.

Although Fig. 5 shows an example of a flooded-type battery (vented battery), the lead-acid battery may be a valve regulated battery (VRLA type).

Next, the performance evaluation of the lead-acid battery will be described.

(a) PSOC life performance

The lead-acid battery is charged and discharged under the idling-stop condition in accordance with SBAS 0101: 2014. Specifically, in the case of a battery with a five-hour-rate capacity of 30 Ah, (a) to (c) below are repeated as one cycle at 25°C ± 2°C until the discharge end voltage becomes 1.2 V/cell or less, and the number of cycles at this time is obtained. At the time of charge and discharge, the operation is suspended for 40 to 48 hours every 3600 cycles.

(a) Discharge 1: the discharge is performed at a current value of 32 A for 59 seconds.
(b) Discharge 2: the discharge is performed at a current value of 300 A for one second.
(c) Charge: the charge is performed at a voltage of 100 A and a voltage of 2.33 V/cell for 60 seconds.

(b) Plate defect

When the mat is attached to the cured positive electrode plate, the mat is peeled off, and the presence or absence of cracks generated on the surface of the positive electrode material is examined. On both sides of the positive electrode plate, cracks with a length of 1 mm or more are counted. For three or more positive electrode plates, the average of the numbers of cracks is calculated, and the number of cracks per plate is evaluated.

(c) Corrosion rate

An overcharge test is performed using a predetermined test battery in a water bath at 75°C ± 2°C with a constant current of 1.7 A (current density: 0.0054 A/cm$^2$) for five days, and thereafter, the operation of pausing for two days (one week) is repeated for three weeks. The apparent current collector area at the time of calculating the current density is set twice the product of the height and width of the outer dimensions of the frame ribs of the positive current collector.

After the three-week overcharge test, the test battery in a fully charged state is disassembled, the positive current collector is taken out and washed with water, a corrosion layer is removed with mannitol, and the test battery is dried. Thereafter, the corrosion rate is calculated by the following formula.

$$\text{Corrosion rate (\%)} = \{(\text{Mass of positive current collector before}$$

$$\text{overcharge test - Mass of positive current collector with corrosion layer}$$

$$\text{removed by mannitol treatment after overcharge test})/(\text{Mass of positive}$$

$$\text{current collector before overcharge test}\} \times 100$$

(d) Elongation of current collector

In the evaluation of the corrosion rate, the test battery after the three-week overcharge test is disassembled, the dimensions of the portion of the frame rib of the positive current collector which is most swollen in the first direction (height direction) and the second direction (width direction) are measured, and the amount of width elongation and the amount of height elongation are determined by comparison with the initial dimensions.

The lead-acid battery according to the present invention will be described as follows.

(1) One aspect of the present invention is a lead-acid battery including: a positive electrode plate; a negative electrode plate; a separator interposed between the positive electrode plate and the negative electrode plate; and an electrolyte solution. The positive electrode plate includes a current collector and a positive electrode material held by the current collector. The current collector has a frame rib, a lug provided on the frame rib, and inner ribs inside the frame rib. The frame rib includes an upper element continuous with the lug, a lower element facing the upper element, and a pair of side elements coupling the upper element with the lower element. The inner rib includes a longitudinal rib extending in a first direction from the upper element toward the lower element, and a transverse rib extending in a second direction from one of the side elements toward the other of the side elements. A striped pattern of a metallic fibrous structure is seen in a cross-section perpendicular to the first direction of the longitudinal rib. An outer peripheral region of the cross-section is made up of a first portion in which the fibrous structure elongates along a contour of the cross-section and a second portion except for the first portion. A percentage R of a length of a contour corresponding to the second portion to a total length of the contour of the cross-section is 30% or more. The thickness of an over-paste of the positive electrode material over the current collector is 0.20 mm or more.

(2) In (1) above, the positive electrode material preferably contains 0.01 to 0.2% by mass of Sb.

(3) In (1) or (2) above, the thickness of the over-paste is preferably 0.21 mm or more.

(4) In any one of (1) to (3) above, the percentage R is preferably 30% or more and 60% or less.

(5) In any one of (1) to (4) above, the positive electrode plate preferably includes a mat attached to an exposed surface of the positive electrode material.

(6) In any one of (1) to (5) above, the cross-section is preferably octagonal.

(7) In any one of (1) to (6) above, the current collector is preferably a current collector punched out of a stretched sheet of lead or a lead alloy.

(8) In any one of (1) to (7) above, the thickness of the inner rib is preferably 0.7 mm or more.

(9) In any one of (1) to (8) above, the thickness of the inner rib is preferably 3 mm or less.

(10) In any one of (1) to (9) above, the rib width of the inner rib is preferably 0.7 mm or more.

(11) In any one of (1) to (10) above, the rib width of the inner rib is preferably 3 mm or less.

(12) In any one of (1) to (11) above, the density of the positive electrode material is preferably 3.6 $g/cm^3$ or more.

(13) In any one of (1) to (12) above, the density of the positive electrode material is preferably 4.8 $g/cm^3$ or less.

(14) A method for manufacturing the lead-acid battery according to any one of (1) to (13) above, the method including the steps of: preparing the current collector; and obtaining the positive electrode plate that includes the current collector and the positive electrode material. The step of preparing the current collector includes the steps of preparing a rolled plate, and performing processing that includes punching on the rolled plate to obtain the current collector having the percentage R of 30% or more. In the step of obtaining the positive electrode plate, the thickness of the over-paste of the positive electrode material over the current collector is 0.20 mm or more.

(15) In the manufacturing method of (14) above, the step of preparing the current collector includes the steps of forming an intermediate grid body having a plurality of intermediate ribs formed in a grid shape by punching, and pressing the intermediate grid body from a thickness direction of the intermediate grid body to form at least some of the inner ribs. The pressing includes deforming at least some of the plurality of intermediate ribs so that at least one end in a rib width direction intersecting an extending direction of each of the intermediate ribs is preferably thinner than a center in the rib width direction and that the percentage R is preferably 30% or more.

Embodiments of the present invention will be described more specifically below based on examples and comparative examples, but the present invention is not limited to the following examples.

<<Batteries A1 to A4>>

<Battery A1>

(1) Preparation of positive electrode plate

A rolled sheet of a Pb-Ca-Sn alloy is punched, and an inner rib is pressed to obtain a current collector X1. Next, a positive electrode paste containing lead powder is prepared, the grid part of the current collector is filled with the positive electrode paste, and cured and dried to prepare a non-chemically converted positive electrode plate. The density of the positive electrode material after chemical conversion is adjusted to 4.1 $g/cm^3$.

The distance from the surface of the current collector to the outer surface of the positive electrode material (thickness of the over-paste) is adjusted to 0.20 mm in a fully charged state after chemical conversion.

The specifications of the current collector X1 are as follows.

Thickness of inner rib (thickness of rolled sheet before punching): 0.95 mm
Height H of frame rib: 115 mm
Width W of frame rib: 101 mm
Second-portion rate R of section C: 17% (first-portion rate: 83%)
Shape of section C: Octagonal

(2) Preparation of negative electrode plate

A negative electrode paste is prepared by mixing lead powder, water, diluted sulfuric acid, barium sulfate, carbon black, and an organic expander. The negative current collector is filled with the negative electrode paste and cured and dried to obtain a non-chemically converted negative electrode plate.

(3) Preparation of lead-acid batteries

Non-chemically converted negative electrode plates are housed into a bag-like separator and stacked with the positive electrode plates, and an electrode plate group is formed of seven non-chemically converted negative electrode plates and six non-chemically converted positive electrode plates. The electrode plate group is housed into a polypropylene container together with an electrolyte solution (sulfuric acid with a specific gravity of 1.28 at 20°C), and chemical conversion is performed in the container to prepare a flooded-type lead-acid battery A1 with 2 V and a rated five-hour-rate capacity of 30Ah.

<Battery A2>

In the battery A1, a positive electrode paste containing antimony trioxide ($Sb_2O_3$) as an additive is prepared, and the grid part is filled with the positive electrode paste. As the additive, there is used an additive obtained by adjusting the amount of Sb added so that the amount of Sb contained in the positive electrode material is 0.1 parts by mass in terms of elements with the positive electrode material after chemical conversion as 100 parts by mass.
Except for this, a lead-acid battery A2 is prepared similarly to the battery A1.

<Battery A3>

An expanded grid X2 made of a Pb-Ca-Sn alloy is used as the positive current collector. In a fully charged state after chemical conversion, the shortest distance from the surface of the positive current collector to the outer surface of the positive electrode material (thickness of the over-paste) is adjusted to 0.19 mm.
Except for this, a lead-acid battery A3 is prepared similarly to the battery A1.
The specifications of the positive electrode plate using the expanded grid X2 are as follows.

Thickness of undeployed part of expanded grid (thickness of lug): 1.00 mm
Height of plate: 115 mm
Width of plate: 101 mm

<Battery A4>

In the battery A3, a positive electrode paste containing antimony trioxide ($Sb_2O_3$) as an additive is prepared, and the grid part is filled with the positive electrode paste. As the additive, there is used an additive obtained by adjusting the amount of Sb added so that the amount of Sb contained in the positive electrode material is 0.1 parts by mass in terms of elements with the positive electrode material after chemical conversion as 100 parts by mass.
Except for this, a lead-acid battery A4 is prepared similarly to the battery A3.
Table 1 shows the results of evaluation of PSOC life performance and plate defects for batteries A1 to A4. In Table 1, the PSOC life performance is shown as a relative value with the number of PSOC life cycles in battery A1 as 100. Further, the plate defect rate is shown as a relative value with the number of cracks in the battery A1 as 100.

[Table 1]

| Battery | Current collector | Sb content (% by mass) | PSOC life performance | Plate defect rate |
|---------|-------------------|------------------------|------------------------|-------------------|
| A1 | Punched | 0 | 100 | 100 |
| A2 | Punched | 0.1 | 128 | 66 |
| A3 | Expanded | 0 | 72 | 43 |
| A4 | Expanded | 0.1 | 93 | 3.8 |

From Table 1, the batteries A1 and A2 formed by punching the positive current collector have improved PSOC life performance but have a high plate defect rate, as compared to the batteries A3, A4 in which the positive current collector is an expanded grid.

On the other hand, it can be seen that the plate defect rate is reduced by containing Sb in the positive electrode material. Especially in the case of the expanded grid, a comparison between the batteries A3 and A4 shows that the plate defect rate is significantly reduced by containing Sb. However, in the punched grid, when the batteries A1 and A2 are compared, the ratio of improvement in plate defect rate due to Sb being contained is not as high as in the case of the expanded grid.

<<Batteries B1 to B29>>

In the battery A1, the second-portion rate R of the section C, the thickness of the over-paste, and the amount of Sb added are changed. A plurality of lead-acid batteries (batteries B1 to B29) having different combinations of the second-portion rate R, the thickness of the over-paste, and the amount of Sb added are prepared, and plate defect rates are evaluated.

<<Batteries C1 to C10>>

In the battery A3 in which the positive current collector is made of an expanded grid, the thickness of the over-paste and the amount of Sb added are changed. A plurality of lead-acid batteries (batteries C1 to C10) having different combinations of the thickness of the over-paste and the amount of Sb added are prepared, and plate defect rates are evaluated.

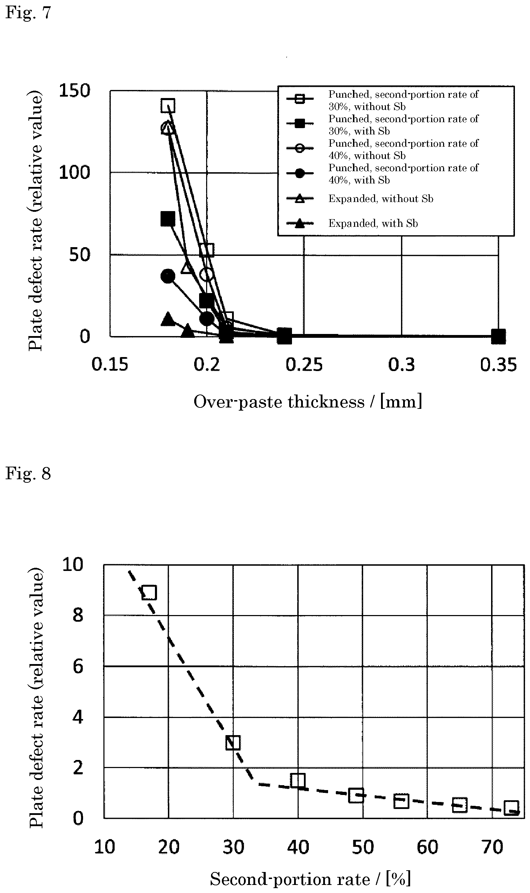

Fig. 7 shows the relationship between the thickness of the over-paste and the plate defect rate. As shown in Fig. 7, regardless of the presence or absence of Sb and the value of the second-portion rate R, when the second-portion rate R is 30% or more, as the thickness of the over-paste is increased, the defect rate tends to sharply decrease from a point where the thickness is 0.20 mm.

Therefore, by setting the second-portion rate R to 30% or more and the thickness of the over-paste to 0.20 mm or more, it is possible to achieve a lead-acid battery in which plate defects are reduced even in a punched current collector. More preferably, by setting the over-paste thickness to 0.21 mm or more, it is possible to achieve a lead-acid battery in which plate defects are significantly reduced.

Further, the batteries B8, B18, and B25 to B29 (cf. Table 2) are compared. These lead-acid batteries have a common over-paste thickness of 0.21 mm and a common amount of Sb added of 0.1% by mass but have different second-portion rates R. By evaluating the plate defect rate of these lead-acid batteries, it is possible to evaluate the dependence of the plate defect rate on the second-portion rate R.

Fig. 8 shows the relationship between the second-portion rate R and the plate defect rate. As shown in Fig. 8, the higher the second-portion rate, the lower the plate defect rate. However, it can be seen from Fig. 8 that the degree of reduction in plate defect rate changes rapidly in a region where the second-portion rate is 30 to 40%. Even when the second-portion rate is changed from 40% to a high value exceeding 40%, the effect of improving the plate defect rate is slight.

On the other hand, the higher the second-portion rate R is made, the more easily the current collector elongates due to corrosion when used in an overcharged state. From the viewpoint of reducing the elongation of the current collector while maintaining a low plate defect rate, it can be said to be preferable to limit the second-portion rate to a certain rate or less (e.g., 60% or less).

<<Battery D1>>

In the battery of Example 2 (Battery B13) in which the second-portion rate is 40% and the thickness of the over-paste is 0.21 mm, and Sb is not added, before the step of curing the positive electrode plate, a mat (thickness 100 $\mu$m) of glass fibers is stuck to the exposed surface of the positive electrode material. Then, with the mat attached, curing and drying are performed, and the element is inserted into the container to perform the chemical conversion.

Except for this, a battery D1 is prepared similarly to the battery B13, and the plate defect rate is evaluated.

The plate defect rate of the battery B 13 is 5.3 (a relative value with the battery A1 as 100) (cf. Table 2). In contrast, the plate defect rate of the battery D1 is 0.49, which has been remarkably improved by providing the mat.

Table 2 shows the plate defect rate of each of the batteries B1 to B29 and the battery D1 together with the second-portion rate R, the thickness of the over-paste, the Sb content, and the presence or absence of the mat. Table 3 shows the plate defect rate of each of the batteries C1 to C10 together with the thickness of the over-paste, the Sb content, and the presence or absence of the mat.

In Table 2, by comparing the batteries B12, B17, B21, and B22 with an over-paste thickness of 0.20 mm and a second-portion rate R of 40% and by comparing the batteries B13, B18, B23, and B24 with an over-paste thickness of 0.21 mm and a second-portion rate R of 40%, it can be seen that the lead-acid battery containing Sb in the positive electrode material in the range of 0.01 to 0.2% by mass in terms of metal can further reduce the plate defects.

[Table 2]

| Battery | Sb content (% by mass) | Plate defect rate | Second-portion rate (%) | Over-paste thickness (mm) | Thin mat |
|---|---|---|---|---|---|
| B 1 | 0 | 141 | 30 | 0.18 | No |
| B 2 | 0 | 53 | 30 | 0.20 | No |
| B 3 | 0 | 11 | 30 | 0.21 | No |
| B4 | 0 | 1.1 | 30 | 0.24 | No |
| B 5 | 0 | 0.45 | 30 | 0.35 | No |
| B 6 | 0.1 | 72 | 30 | 0.18 | No |
| B 7 | 0.1 | 22 | 30 | 0.20 | No |
| B 8 | 0.1 | 3.0 | 30 | 0.21 | No |
| B 9 | 0.1 | 0.38 | 30 | 0.24 | No |
| B10 | 0.1 | 0.38 | 30 | 0.35 | No |
| B 11 | 0 | 127 | 40 | 0.18 | No |
| B 12 | 0 | 38 | 40 | 0.20 | No |
| B1 3 | 0 | 5.3 | 40 | 0.21 | No |
| B14 | 0 | 1.1 | 40 | 0.24 | No |
| B 15 | 0 | 0.49 | 40 | 0.35 | No |
| B 16 | 0.1 | 37 | 40 | 0.18 | No |
| B 17 | 0.1 | 11 | 40 | 0.20 | No |
| B 18 | 0.1 | 1.5 | 40 | 0.21 | No |
| B19 | 0.1 | 0.38 | 40 | 0.24 | No |
| B 20 | 0.1 | 0.42 | 40 | 0.35 | No |
| B 21 | 0.01 | 14 | 40 | 0.20 | No |
| B 22 | 0.2 | 10 | 40 | 0.20 | No |
| B 23 | 0.01 | 2.3 | 40 | 0.21 | No |
| B 24 | 0.2 | 1.2 | 40 | 0.21 | No |
| B 25 | 0.1 | 8.9 | 17 | 0.21 | No |
| B 26 | 0. 1 | 0.91 | 49 | 0.21 | No |
| B 27 | 0.1 | 0.68 | 56 | 0.21 | No |
| B 28 | 0.1 | 0.53 | 65 | 0.21 | No |
| B 29 | 0.1 | 0.42 | 73 | 0.21 | No |
| D 1 | 0 | 0.49 | 40 | 0.21 | Yes |

[Table 3]

| Battery | Sb content (% by mass) | Plate defect rate (%) | Over-paste thickness (mm) | Thin mat |
|---|---|---|---|---|
| C1 | 0 | 128 | | No |
| C2 | 0 | 43 | 0.19 | No |
| C3 | 0 | 5.9 | 0.21 | No |

(continued)

| Battery | Sb content (% by mass) | Plate defect rate (%) | Over-paste thickness (mm) | Thin mat |
|---|---|---|---|---|
| C4 | 0 | 0.41 | 0.24 | No |
| C5 | 0 | 0.34 | 0.35 | No |
| C6 | 0.1 | 11 | 0.18 | No |
| C7 | 0.1 | 3.8 | 0.19 | No |
| C8 | 0.1 | 0.53 | 0.21 | No |
| C9 | 0.1 | 0.04 | 0.24 | No |
| C10 | 0.1 | 0.19 | 0.35 | No |

<<Batteries E1 to E6>>

A test battery E1 is prepared using a positive current collector that does not carry a positive electrode material as a positive electrode plate. As the positive current collector, the positive current collector X1 in the battery A1 is used. The test battery E1 is made up of one positive current collector, two chemically converted negative electrode plates sandwiching the current collector, and an electrolyte solution. The negative electrode plate is housed in a bag-shaped separator. Sulfuric acid with a specific gravity of 1.28 at 20°C is used as the electrolyte solution.

Further, in the preparation of the positive current collector X1, the pressing conditions of the inner rib is adjusted to prepare a positive current collector in which the second-portion rate R of the section C has been changed.

Test batteries E2 to E6 having different second-portion rates R are prepared using the prepared positive current collector similarly to the test battery E1, and the corrosion rate and elongation of the current collector are evaluated together with the test battery E1.

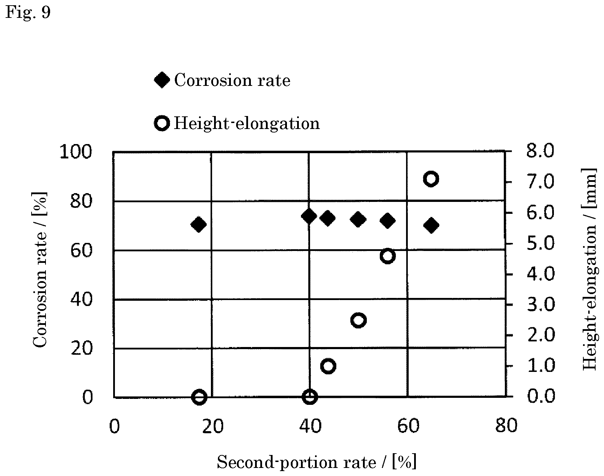

Fig. 9 shows the relationship between the second-portion rate, and the corrosion rate and the amount of elongation (amount of deformation) of the frame rib in the height direction. From Fig. 9, the corrosion rate is substantially constant in the range of the second-portion rate of 17% to 65%. On the other hand, the elongation of the frame rib in the height direction decreases as the second-portion rate decreases from 65%, but the elongation hardly changes at 40% or less and is substantially constant in the range of 17% to 40%.

By the elongation of the frame rib of the positive current collector in the height direction, the positive electrode material becomes more likely to fall off from the positive current collector. Further, in the upper portion of the cell chamber, the positive electrode plate may come into contact with a negative electrode strap (corresponding to the negative electrode shelf 6 in Fig. 5), and a short circuit may occur. However, regarding the former, by making the thickness of the over-paste as large as 0.20 mm or more, corrosion can be reduced by preventing the electrolyte solution from penetrating to the surface of the current collector, and the falling-off of the positive electrode material can be prevented.

Regarding the latter short circuit caused by contact with the negative electrode strap, the separation distance from the lower surface of the negative electrode strap to the top of the positive electrode plate is generally about 10 mm, and the short circuit caused by contact between the positive electrode plate and the negative electrode strap can be prevented when the elongation of the positive current collector is less than about 6 mm. From Fig. 9, when the second-portion rate is 60% or less (more preferably 56% or less), the elongation of the positive current collector is 6 mm or less, so that short circuit caused by contact between the positive electrode plate and the negative electrode strap can be prevented.

Further, by setting the second-portion rate to 40% or less, the elongation (particularly, the elongation in the height direction) due to the corrosion of the positive current collector is reduced. Thereby, the positive electrode material is prevented from falling off from the positive current collector. Also, the short circuit between the positive electrode plate and the negative electrode strap is prevented without depending on the position of the negative electrode strap.

Table 4 shows the evaluation results of the corrosion rate and height elongation of the batteries E1 to E6 together with the value of the second-portion rate R.

[Table 4]

| Battery | Second-portion rate (%) | Corrosion rate (%) | Height-elongation (mm) |
|---|---|---|---|
| E1 | 17 | 70.6 | 0.0 |
| E2 | 40 | 73.9 | 0.0 |

(continued)

| Battery | Second-portion rate (%) | Corrosion rate (%) | Height-elongation (mm) |
|---------|-------------------------|--------------------|------------------------|
| E3 | 44 | 73.1 | 1.0 |
| E4 | 50 | 72.5 | 2.5 |
| E5 | 56 | 72 | 4.6 |
| E6 | 65 | 70 | 7.1 |

INDUSTRIAL APPLICABILITY

The grid body for a lead-acid battery according to the present invention can be applied to a valve regulated lead-acid battery and a flooded-type lead-acid battery and can be suitably used as a power source for starting an automobile, a motorcycle, etc. or a power source for an industrial energy storage apparatus for an electric vehicle (forklift, etc.).

DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole
11: electrode plate group
12: container
13: partition
14: cell chamber
15: lid
16: negative electrode terminal
17: positive electrode terminal
18: vent plug
41, 42: outer surface of positive electrode material
100: grid body
110: frame rib
111: upper element
112: lower element
113, 114: side element
120: inner rib
120A: longitudinal rib
120B: transverse rib
130: lug
132: lower protrusion (foot)
210: first portion
220: second portion

**Claims**

1.  A lead-acid battery comprising:

    a positive electrode plate;

a negative electrode plate;
a separator interposed between the positive electrode plate and the negative electrode plate; and
an electrolyte solution,
wherein the positive electrode plate includes a current collector and a positive electrode material held by the current collector,
the current collector has a frame rib, a lug provided on the frame rib, and inner ribs inside the frame rib,
the frame rib includes an upper element continuous with the lug, a lower element facing the upper element, and a pair of side elements coupling the upper element with the lower element,
the inner rib includes
a longitudinal rib extending in a first direction from the upper element toward the lower element, and
a transverse rib extending in a second direction from one of the side elements toward the other of the side elements,
a striped pattern of a metallic fibrous structure is seen in a cross-section perpendicular to the first direction of the longitudinal rib,
an outer peripheral region of the cross-section is made up of a first portion in which the fibrous structure elongates along a contour of the cross-section and a second portion except for the first portion,
a percentage R of a length of a contour corresponding to the second portion to a total length of the contour of the cross-section is 30% or more, and
a thickness of an over-paste of the positive electrode material over the current collector is 0.20 mm or more.

2. The lead-acid battery according to claim 1, wherein the positive electrode material contains 0.01 to 0.2% by mass of Sb.

3. The lead-acid battery according to claim 1 or 2, wherein the thickness of the over-paste is 0.21 mm or more.

4. The lead-acid battery according to any one of claims 1 to 3, wherein the percentage R is 30% or more and 60% or less.

5. The lead-acid battery according to any one of claims 1 to 4, wherein the positive electrode plate includes a mat attached to an exposed surface of the positive electrode material.

6. The lead-acid battery according to any one of claims 1 to 5, wherein the cross-section is octagonal.

7. The lead-acid battery according to any one of claims 1 to 6, wherein the current collector is a current collector punched out of a stretched sheet of lead or a lead alloy.

8. The lead-acid battery according to any one of claims 1 to 7, wherein a thickness of the inner rib is 0.7 mm or more.

9. The lead-acid battery according to any one of claims 1 to 8, wherein the thickness of the inner rib is 3 mm or less.

10. The lead-acid battery according to any one of claims 1 to 7, wherein the thickness of the inner rib is 0.7 mm or more and 3 mm or less.

11. The lead-acid battery according to any one of claims 1 to 10, wherein a rib width of the inner rib is 0.7 mm or more.

12. The lead-acid battery according to any one of claims 1 to 11, wherein the rib width of the inner rib is 3 mm or less.

13. The lead-acid battery according to any one of claims 1 to 10, wherein a rib width of the inner rib is 0.7 mm or more and 3 mm or less.

14. The lead-acid battery according to any one of claims 1 to 13, wherein a density of the positive electrode material is 3.6 g/cm$^3$ or more.

15. The lead-acid battery according to any one of claims 1 to 14, wherein the density of the positive electrode material is 4.8 g/cm$^3$ or less.

16. The lead-acid battery according to any one of claims 1 to 13, wherein a density of the positive electrode material is 3.6 g/cm$^3$ or more and 4.8 g/cm$^3$ or less.

**17.** A method for manufacturing the lead-acid battery according to any one of claims 1 to 7, the method comprising the steps of:

preparing the current collector; and
obtaining the positive electrode plate that includes the current collector and the positive electrode material, wherein the step of preparing the current collector includes the steps of
preparing a rolled plate, and
performing processing that includes punching on the rolled plate to obtain the current collector having the percentage R of 30% or more, and
in the step of obtaining the positive electrode plate, the thickness of the over-paste of the positive electrode material over the current collector is 0.20 mm or more.

**18.** The method for manufacturing a lead-acid battery according to claim 8, wherein
the step of preparing the current collector includes the steps of
forming an intermediate grid body having a plurality of intermediate ribs formed in a grid shape by punching, and
pressing the intermediate grid body from a thickness direction of the intermediate grid body to form at least some of the inner ribs, and
the pressing includes deforming at least some of the plurality of intermediate ribs so that at least one end in a rib width direction intersecting an extending direction of each of the intermediate ribs is thinner than a center in the rib width direction and that the percentage R is 30% or more.

Fig. 1A

MD
(Stretching
direction)

Fig. 1B

MD
(Stretching direction)

Fig. 2A

Fig. 2B

Fig. 3

Fig. 4

Fig. 5

Fig. 6

Fig. 7

Fig. 8

Fig. 9

## INTERNATIONAL SEARCH REPORT

| International application No. |
| --- |
| PCT/JP2019/040718 |

### A. CLASSIFICATION OF SUBJECT MATTER
Int.Cl.  H01M4/14(2006.01)i, H01M4/62(2006.01)i, H01M4/68(2006.01)i,
         H01M4/73(2006.01)i

According to International Patent Classification (IPC) or to both national classification and IPC

### B. FIELDS SEARCHED

Minimum documentation searched (classification system followed by classification symbols)
Int.Cl. H01M4/14, H01M4/62, H01M4/68, H01M4/73

| Documentation searched other than minimum documentation to the extent that such documents are included in the fields searched | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2017-139215 A (GS YUASA INTERNATIONAL LTD.) 10 August 2017 & US 2017/0222214 A1 & EP 3203572 A1 & CN 107026271 A & KR 10-2017-0092111 A | 1-18 |
| A | WO 2015/056417 A1 (GS YUASA INTERNATIONAL LTD.) 23 April 2015 & US 2016/0254570 A1 & EP 3059791 A1 & CN 105917503 A | 1-18 |
| A | JP 6-267544 A (MATSUSHITA ELECTRIC INDUSTRIAL CO., LTD.) 22 September 1994 (Family: none) | 1-18 |

☒  Further documents are listed in the continuation of Box C.  ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 02 December 2019 (02.12.2019) | 10 December 2019 (10.12.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2019/040718

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2013-122838 A (FURUKAWA BATTERY CO., LTD.) 20 June 2013 (Family: none) | 1-18 |
| A | JP 2005-56622 A (JAPAN STORAGE BATTERY CO., LTD.) 03 March 2005 (Family: none) | 1-18 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 51060936 A
- JP 10275618 A
- JP 2015038860 A